# EUROPEAN PATENT APPLICATION

(11) **EP 4 145 396 A1**
(43) Date of publication of application: **08.03.2023**
(21) Application number: 20732645.5
(22) Date of filing: 27.04.2020
(51) Int. Cl.: G06T 15/20

(54) **METHOD FOR ADAPTING THE RENDERING OF A SCENE**

(71) Applicant: Jump Into Reality, S.L., 28001 MADRID (ES)
(72) Inventor: DÍAZ BENAVENTE, Gustavo, 28001 MADRID (ES)
(74) Representative: Isern Patentes y Marcas S.L.
(86) International application number: PCT/ES2020/070270
(87) International publication number: WO 2021/219901

(57) **Abstract**

The present invention relates to a method for adapting the rendering of a virtual environment based on the performance of the computer system in which it is run by modifying the graphic parameters of the generated images, and more specifically to a method that enables the highest possible graphic quality to be dynamically maintained in a virtual reality or augmented reality simulation, depending on the availability of the computer system's hardware resources.

## Description

### Technical field of the invention

The present invention relates to a method for adapting the rendering of a virtual environment based on the performance of the computer system in which it is run by modifying the graphic parameters of the generated images, and more specifically to a method that enables the highest possible graphic quality to be dynamically maintained in a virtual reality or augmented reality simulation, depending on the availability of the computer system's hardware resources.

### Background of the invention

Virtual reality and augmented reality systems are increasingly widespread and are used in a growing number of applications ranging from entertainment to medicine, in which the advantages of this technology are known and appreciated. However, there are still many fields in which this technology could be used and it is not yet widespread due to the technological challenges posed by virtual and augmented reality.

Among the main obstacles that this technology faces is the enormous computational cost of representing a virtual environment with a realistic appearance, which requires either simplifying the virtual environment or using very high-performance computer systems that are unattainable by the general public, generally limited to specific applications, such as academic and research institutions.

One of the fields that could most benefit from the advantages of virtual reality systems is that of architectural design, interior architecture and decoration, wherein virtual and augmented reality could be shown as an effective tool to create, edit and display home renovation and decoration projects in a simple and attractive way. Ideally, virtual reality would enable industry professionals to show customers a virtual simulation of their designs with a realistic appearance and without the need for two-dimensional drawings that are difficult to interpret.

However, to use this tool satisfactorily, customers should have very high-performance computing equipment capable of working with graphics computing applications that require substantial hardware resources, which would restrict the potential market to only those customers who have this type of equipment, or would reduce the graphic quality of the representation to an unacceptable level so that any system can display the design.

### Description of the invention

The present invention proposes a solution to the aforementioned problems by means of a method, a program to implement the method and a means with said program, to adapt the rendering of a three-dimensional scene as defined in the independent claims.

In a first inventive aspect, the invention provides *a method implemented by a computer system to adapt the rendering of a scene belonging to a virtual environment, wherein the scene comprises objects and textures, said scene being rendered in a plurality of images with a level of detail, and wherein for each image of the plurality of images the method comprises the steps of*
*obtaining the available processing capacity of the computer system based on at least the CPU processing load of the computer system; obtaining the available memory of the computer system based on at least the available RAM of the computer system;*
*calculating the processing cost of rendering the scene*
   - *if the processing cost of rendering the scene is greater than the available processing capacity of the computer system, then: reducing the level of detail of the image;*
*calculating the memory required to render the scene,*
   - *if the memory required to render the scene is greater than the available memory of the computer system, then: removing non-visible objects from the image.*

The method enables the graphic quality of the images (frames) generated by a graphics computing application or tool to be adapted based on the available hardware resources of the computer system in which it is run. The method is applied iteratively for each image rendered from a scene file that contains a three-dimensional design of an environment in which virtual reality or also augmented reality is to be simulated. The images generated by the graphics computing application are shown to a user by means of display media of the computer system with a sufficient frequency, preferably about 90 images per second, or frames per second (FPS) in the case of virtual reality, so that the user does not perceive discontinuities when interacting with the environment.

Advantageously, thanks to the present method, a virtual environment can be rendered regardless of the complexity of the design and the performance of the computer system, and always maintaining the highest possible graphic quality.

Throughout this document, it will be understood that rendering corresponds to the process of synthesising one or more images from a scene file, or simply a scene, which contains a model of the geometric representation of a virtual environment. Said scene will preferably comprise a plurality of objects and the corresponding textures that cover said objects.

The computer system preferably comprises at least one computer, with at least one processor or CPU, RAM and display media. In a preferred embodiment, the computer system further comprises a graphics card or GPU. In another embodiment, the computer system comprises motion sensors, or sensors, configured to sense the user's movement. The display media can be of various types; in the case of an augmented reality simulation, they are preferably a screen; in the case of a virtual reality simulation, they are also a helmet, glasses or virtual reality viewer (HMD).

The set of qualitative features that make an image generated by graphics computing resemble a real representation, for example a photographic representation, of an object or environment should be interpreted as graphic quality.

As previously mentioned, a scene is made up of a series of virtual objects and textures, wherein each object has a level of detail that corresponds to the number of processes required to render said object. For example, one common way to render an object is through polygonal modelling of the same; the greater the number of polygons that define the object, the greater the level of detail of the image.

Therefore, the images that make up the rendering of the scene will correspond to an overall level of detail depending on the level of detail of each of the objects with the respective textures thereof that form it. In this sense, reducing the level of detail should be understood as the set of techniques that enables the complexity of the representation of the geometric model to be reduced in order to reduce the number of computing processes required to render an object in the scene, for example, by reducing the number of vertices with which a polygonal model of the object is represented.

In an exemplary embodiment, reducing the level of detail comprises reducing the number of vertices of the polygons used to represent one or more objects in the scene. Reducing the level of detail may involve reducing the level of detail of at least some of the virtual objects that form part of any of the images in the scene. Therefore, both the number and the complexity of the processes used to render said virtual object can be reduced. Thus, for example, in the event that the object is rendered through polygonal modelling, one way to reduce the level of detail of the object and, consequently, the overall level of detail would be to reduce the number of polygons or vertices used to define the object.

Available processing capacity of the computer system should be understood as the remaining processing capacity of the computer system processor or processors at any given moment when the processor is already processing a plurality of instructions or processes; in a preferred embodiment, the available processing capacity is calculated as the difference between the total number of processes that the processor can run and the active processes of the processor at any given time. Processing cost of rendering the scene should be understood as the number of processes that the rendering operation requires.

Similarly, the available memory of the computer system is the volume of volatile memory that can be used to process the rendering at any given moment, which in one embodiment can be calculated as the difference between the total volatile memory of the computer system and the volatile memory being using at any given moment. The memory required to render the scene corresponds to the amount of memory required to represent an image.

Removing the non-visible objects from the image should be understood as removing or freeing the memory partition corresponding to the objects to be rendered, without modifying the scene file; memory partition may not have been performed at the time the method is implemented; in this case, instead of freeing the memory partition, memory allocation is not performed for the non-visible objects. Non-visible objects are objects in the scene that at any given moment are not visible from the point of view of a user participating in the simulation. The visible object condition depends on the user's position; preferably, objects that are further away from the user's position will not be represented until the distance decreases. For each image, the user's position is determined based on the last known position in the virtual environment and the direction of their movement. In the event that there is no previous position and movement, or they are unknown, the user will be considered to be at an arbitrary position, for example, at the origin of the coordinate system.

The method can be implemented as a subroutine that is run in a scene rendering process by a graphics computing tool in a virtual reality program; in particular, the method runs one iteration for each image that is rendered, preferably at a frequency of at least 70 FPS, and more preferably about 90 FPS.

In a particular embodiment, *the computer system comprises motion sensors, and wherein the method further comprises the steps of:*
*obtaining a motion vector based on signals from the motion sensors of the computer system;*
*calculating a velocity vector based on at least the motion vector.*

Virtual reality and augmented reality systems, in addition to representing a virtual environment, consider the point of view of the user who moves around the environment in the representation of the scene; in this embodiment of the method, a vector relative to the user's position and/or virtual movement is obtained, preferably from the signals of motion sensors, and by considering at least this motion vector, the user's corresponding velocity vector is calculated to render the scene. In addition, the velocity vector enables the user's immediate movements to be anticipated, so the velocity vector can be used to prepare the representation of the following image in advance.

In a particular embodiment, *the level of detail of the image is reduced based on the velocity vector.* When the user moves faster, the user has less perception of the details, so the level of detail of the image can be reduced without making the user's experience worse; in this way, the method reduces the level of detail of the image based on the modulus of the velocity vector; when the user moves faster, the modulus of the velocity vector is greater, and the detail is further reduced. In one embodiment, to reduce the level of detail, the number of vertices of an object in the scene is divided by a factor proportional to the modulus of the velocity vector.

In a particular embodiment, the overall level of detail of the image is reduced by between 10 % and 50 %. Reducing the level of detail by a maximum of 50 % achieves a representation with acceptable complexity; a 10 % reduction in the level of detail is the minimum that enables the processing cost of rendering to be effectively decreased.

In a particular embodiment, *each image is rendered by making at least one draw call for each object and texture in the scene, and wherein if the processing cost of rendering the scene is greater than the available processing capacity of the computer system, then the method further comprises the step of:*
*reducing the number of draw calls.*

During rendering, the graphics computing application typically makes a plurality of draw calls to represent each of the objects with the corresponding textures thereof that make up the image part of the scene. Thus, if a scene has few objects and textures, the number of draw calls will be reduced, and consequently the processing means will have to process fewer instructions and the workload for them will be lower. On the contrary, if, as usually happens, a scene has a large number of objects with the respective textures thereof, this entails a very high computational cost, with the corresponding difficulties in rendering.

Like in a scene, not all the objects that are part of the different images to be rendered are essential; the purpose of reducing the number of draw calls is to reduce the rendering of non-essential objects for the image and for the scene. In this way, the rendering of a scene is prioritised, even if only with the essential objects thereof, before causing the computer system to overload and prevent rendering.

In a particular embodiment, *the number of draw calls is reduced based on the velocity vector.* In this case, the number of draw calls of the image is reduced proportionally to the module of the velocity vector, preferably dividing the number of draw calls in the scene by a factor proportional to the module of the velocity vector.

In another embodiment, the number of draw calls is reduced by between 10 % and 50 %. It is estimated that the minimum reduction in the number of draw calls that enables an effective improvement in the computational cost of representing the scene is 10%; similarly, it is considered that the maximum reduction in the number of draw calls that provides an acceptable representation of the model is 50 %.

In a particular embodiment, *each image is rendered according to a screen resolution of the computer system display screen, and wherein if the processing cost of rendering the scene is greater than the available processing capacity of the computer system, then the method further comprises the step of:*
*reducing the percentage of screen resolution at which the image is rendered.*

The rendering of a scene is adapted to the particular resolution of a display media, display screen or simply a screen, on which the generated image is shown; a high resolution screen enables all the details of a highly complex final image to be appreciated but the representation of this high resolution image will be very expensive in terms of computing; therefore, to reduce the computational cost of rendering a high-resolution image, the method enables the screen resolution to be reduced by a given percentage and the images to be displayed even on low-performance equipment with acceptable quality.

In a particular embodiment, *the percentage of screen resolution is reduced based on the velocity vector.* Advantageously, the screen resolution at which the image is rendered is reduced based on a factor proportional to the modulus of the velocity vector to decrease the processing cost of rendering. In one embodiment, the percentage of screen resolution is subtracted by a factor proportional to the modulus of the velocity vector.

In a particular embodiment, if the processing cost of rendering the scene is greater than the available processing capacity of the computer system, then the percentage of screen resolution is reduced by between 10% and 50%. Changes in screen resolution, in particular reduction, are perceived more strikingly by the user than other measures, so it is advantageous to limit the maximum reduction to 50 %.

In a particular embodiment, *if the memory required to render the scene is greater than the available memory of the computer system, then the method further comprises the step of:*
*removing non-visible textures from the image.*

As with the step of removing objects, removing the textures is equivalent to freeing up the memory allocation previously made for the textures in the scene. Each object of the model contained in the scene can be covered by a large number of textures whose rendering requires a large amount of resources. However, some of these textures are not essential and/or are not visible from the user's point of view, so it is advantageous to omit these textures from the rendering.

In a particular embodiment, *the computer system comprises a GPU, wherein, in the step of obtaining the available processing capacity of the computer system, said available processing capacity of the computer system is also obtained based on the GPU processing load.* Advantageously, calculating the processing capacity of the computer system involves, in addition to the CPU load, the processing load of the GPU, which will preferably be a dedicated GPU, so that both processing means are considered together.

In a preferred embodiment, the distribution of the processing cost of rendering between the GPU and the CPU is 70 % for the GPU and 30 % for the CPU.

In a particular embodiment, *the computer system comprises a GPU, wherein, in the step of obtaining the available memory of the computer system, said available memory of the computer system is also obtained based on the available GPU memory.* In this way, the use of the total volatile memory of the computer system can be optimised, considering both memories to more efficiently allocate the available memory.

In a particular embodiment, *the method further comprises the step of:*
*allocating memory of a GPU of the computer system for textures.*

The computer system partitions or allocates memory in the very memory of the graphics processing unit (or GPU memory) to represent the textures. This is especially advantageous in cases where the scene comprises highly detailed objects with a wide variety of textures.

In a particular embodiment, *each texture in the scene comprises a plurality of MIP maps, and wherein the method further comprises the step of:*
*if the GPU memory is insufficient, then replacing one or more textures with one of the corresponding MIP maps thereof.*

As a way to reduce the number of processes that the processing means run during rendering, each texture file comprises a set of copies of the original texture at a reduced scale and resolution; these copies, called MIP maps, are used to represent parts of the scene that require less detail; the MIP maps (also called mipmaps) are used in place of full-size textures to decrease the amount of memory partitioned for rendering. Typically, each texture comprises a set of MIP maps arranged so that one map is reduced in size from the previous map, for example, by half. In one embodiment, if the GPU memory is insufficient, then a smaller MIP map is used.

In a second inventive aspect, the invention provides a *computer program with instructions that, when run by a computer system, causes the computer system to carry out the steps of the method according to the first inventive aspect.* In a third inventive aspect, the invention provides a *medium readable by a computer system with instructions that, when run by a computer system, cause the computer system to carry out the steps of the method according to the first inventive aspect.*

These and other features and advantages of the invention will become apparent from the description of the preferred, but not exclusive, embodiments which are illustrated by way of non-limiting example in the accompanying drawings.

### Brief description of the drawings

Figure 1 shows a flow chart of a first embodiment of the method.
Figure 2 shows a flow chart of a second embodiment of the method.

### Detailed description of an exemplary embodiment

The following detailed description provides numerous specific details as examples to provide a thorough understanding of the relevant teachings. However, it will be apparent to those skilled in the art that the present teachings can be implemented without such details.

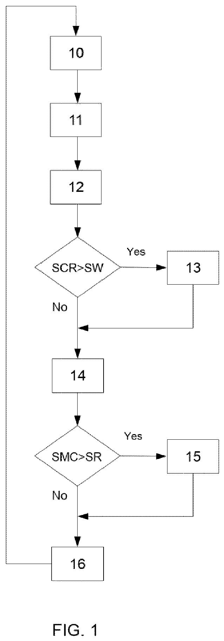

In a first exemplary embodiment, the method, illustrated by the chart in Figure 1, is run on a moderate-performance home computer with at least one CPU, one RAM unit, one peripheral device with sensors to detect user interactions during simulation, and display media. The computer has a virtual reality program installed that enables a user to explore a virtual environment generated from an architectural design. In order to not exceed the capacity of the computer and keep the graphic quality of the representation as high as possible, the program code includes an algorithm that enables the method for adapting the rendering according to the invention to be run, and it is run iteratively during the rendering process of each image. A three-dimensional geometric model stored as a scene file has been generated from the architectural design; this scene file comprises the objects of the architectural design and a set of textures stored in bitmap format to cover said objects.

The virtual reality program includes a graphics computing application that enables the scene to be rendered dynamically based on the user's movement. To represent the virtual environment, the program generates a plurality of images according to the geometric model of the scene and the user's virtual position and movement. The images are successively displayed through the display media at a frequency high enough to achieve a continuous sense of the image; for a conventional computer monitor, 30 FPS (frames per second) or even 20 FPS is sufficient; in the case of an HMD device, a higher frequency of approximately 90 FPS is recommended.
- For each one of the images that are to be rendered, the available processing capacity of the computer system (SW) at a given moment is first obtained (10); in a simple example, it is obtained (10) by subtracting the CPU processing load (CW) from the CPU total processing capacity.
- The available memory of the computer system (SR) is obtained (11) from the available RAM (CA) at a given moment.
- In many computers, both the available processing capacity of the computer system (SW) and the available memory of the computer system (SR) can be obtained for example from the operating system or an API (application programming interface) for graphics computing; however, if not possible, any other known method can be used.
- Next, the processing cost of rendering the scene (SCR) is calculated (12) based on the level of detail and the number of objects and textures in the scene, and the memory cost of rendering the scene (SMC) is also calculated (14).
   - If the processing cost of rendering the scene (SCR) is greater than the available processing capacity of the computer system (SW), the overall level of detail (LOD) is reduced (13).
   - If the memory required to render the scene (SMC) is greater than the available memory of the computer system (SR), the memory allocation for the objects that are not visible from the user's point of view is removed (15).

Finally, rendering (16) of the image is performed, image which is subsequently shown to the user through the display media, and the program repeats the method again for the next image.

The program also has two possible modes of operation: a simulation mode and an edit mode for the user to modify the geometric model. In addition to use on a computer, the method can be used on a smartphone, via a mobile application (app) installed on the same, or through the Internet, via a web browser.

In a second exemplary embodiment, the computer system comprises a user terminal, an HMD (head mounted display) device and a server wherein the program is installed, and which is accessed through the Internet. The user terminal again comprises a moderate-performance computer with a graphics card with a GPU. The HMD (head mounted display) device integrates the display media and sensors that capture the user's movement. In other examples, the user accesses the server through their terminal, from which they download the program, to then install it in their own terminal.

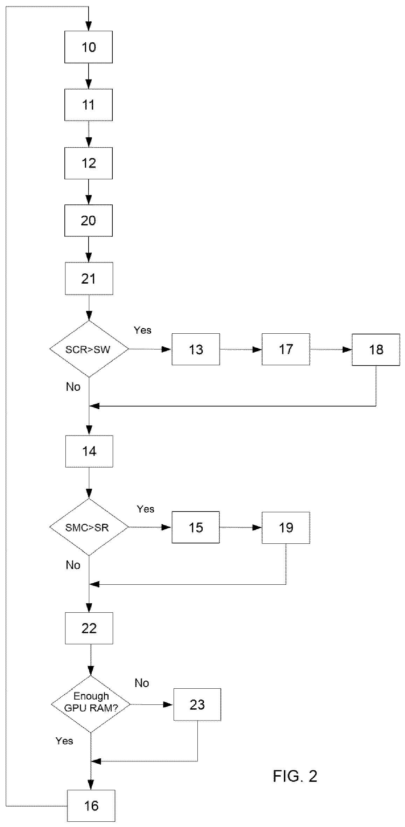

In this example of the method, illustrated in the diagram of Figure 2, the program obtains (20), from the sensors of the HMD device that the user carries on his head, a set of signals grouped into a motion vector (VM) with which the program calculates (21) a velocity vector (VS) that will be used to determine from the user's point of view which objects or textures in the scene are visible and which are not. The velocity vector (VS) is also used as a reduction factor for the parameters through which the graphic quality of the image is adapted, so that at a greater motion speed the reduction in the quality of the rendered images is greater in order to offset the higher processing cost and memory.

The available processing capacity of the computer system (SW) is obtained (10) in this example, the method considering both the CPU processing load (CW) and the GPU processing load (GW). The available memory of the computer system (SR) is obtained (11) from the available RAM (CA) and the available GPU memory (GA).

As an alternative or in addition to reducing (13) the overall level of detail (LOD) and removing (15) the memory allocation for non-visible objects, if the available processing capacity of the computer system (SW) is less than the processing cost of rendering the scene (SCR), then:
- the number of draw calls (DC) is reduced (17) and/or
- the screen resolution (SP) is reduced (18).

The reduction of any of these parameters (LOD, DC, SP) can be a fixed percentage, for example, between 10 % and 50 %, or it can be a variable value obtained from the product of a factor by the modulus of the velocity vector (VS), based on the performance of the equipment.

In addition, if the memory required to render the scene (SMC) is greater than the available memory of the computer system (SR), as an alternative or in addition to the previous actions, the memory allocation for the non-visible textures is removed (19).

In this example of the method, the step of allocating (22) GPU memory for the textures is included. If the GPU memory cache is not sufficient, the program replaces (23) the full-size textures with the corresponding larger MIP map, and optionally in the corresponding objects, it also replaces the MIP maps with a smaller MIP map.

### Clauses of the invention

1. A method implemented by a computer system to adapt the rendering of a scene belonging to a virtual environment, wherein the scene comprises objects and textures, said scene being rendered in a plurality of images with a level of detail (LOD), and wherein for each image of the plurality of images the method comprises the steps of:
   obtaining (10) the available processing capacity of the computer system (SW)
   based on at least the CPU processing load (CW) of the computer system;
   obtaining (11) the available memory of the computer system (SR) based on at least the available RAM (CA) of the computer system;
   calculating (12) the processing cost of rendering the scene (SCR)
      - if the processing cost of rendering the scene (SCR) is greater than the available processing capacity of the computer system (SW), then:
         reducing (13) the level of detail (LOD) of the image;
   calculating (14) the memory required to render the scene (SMC),
      - if the memory required to render the scene (SMC) is greater than the available memory of the computer system (SR), then:
         removing (15) non-visible objects from the image.
2. The method according to the preceding clause, wherein the computer system comprises motion sensors, and wherein the method further comprises the steps of:
   obtaining (20) a motion vector (VM) based on signals from the motion sensors of the computer system;
   calculating (21) a velocity vector (VS) based on at least the motion vector (VM).
3. The method according to the preceding cl, wherein the level of detail (LOD) of the image is reduced based on the velocity vector (VS).
4. The method according to any of the preceding clauses, wherein each image is rendered by making at least one draw call (DC) for each object and texture in the scene, and wherein if the processing cost of rendering the scene (SCR) is greater than the available processing capacity of the computer system (SW), then the method further comprises the step of:
   reducing (17) the number of draw calls (DC).
5. The method according to the preceding clause when it depends on clause 2, wherein the number of draw calls (DC) is reduced based on the velocity vector (VS).
6. The method according to any of the preceding clauses, wherein each image is rendered according to a screen resolution (SP) of the computer system display screen, and wherein if the processing cost of rendering the scene (SCR) is greater than the available processing capacity of the computer system (SW), then the method further comprises the step of:
   reducing (18) the percentage of screen resolution (SP) at which the image is rendered.
7. The method according to the preceding clause when it depends on clause 2, wherein the percentage of screen resolution (SP) is reduced based on the velocity vector (VS).
8. The method according to any of the preceding clauses, wherein if the memory required to render the scene (SMC) is greater than the available memory of the computer system (SR), then the method further comprises the step of:
   removing (19) non-visible textures from the image.
9. The method according to any of the preceding clauses, wherein the computer system comprises a GPU, wherein, in the step of obtaining the available processing capacity of the computer system (SW), said available processing capacity of the computer system (SW) is also obtained based on the GPU processing load (GW).
10. The method according to any of the preceding clauses, wherein the computer system comprises a GPU, wherein, in the step of obtaining the available memory of the computer system (SR), said available memory of the computer system (SR) is also obtained based on the available GPU memory (GA).
11. The method according to any of the preceding clauses, wherein the computer system comprises a GPU, wherein the method further comprises the step of:
   allocating (22) memory of a GPU of the computer system for textures.
12. The method according to the preceding clause, wherein each texture in the scene comprises a plurality of MIP maps, and wherein the method further comprises the step of:
   if the GPU memory is insufficient, then replacing (23) one or more textures with one of the corresponding MIP maps thereof.
13. A computer program with instructions that, when run by a computer system, causes the computer system to carry out the steps of the method according to any of clauses 1-12.
14. A medium readable by a computer system with instructions that, when run by a computer system, cause the computer system to carry out the steps of the method according to any of clauses 1-12.

## Claims

1. A method implemented by a computer system to adapt the rendering of a scene belonging to a virtual environment, wherein the scene comprises objects and textures, said scene being rendered in a plurality of images with a level of detail (LOD), and wherein for each image of the plurality of images the method comprises the steps of:
obtaining (10) the available processing capacity of the computer system (SW) based on at least the CPU processing load (CW) of the computer system;
obtaining (11) the available memory of the computer system (SR) based on at least the available RAM (CA) of the computer system;
calculating (12) the processing cost of rendering the scene (SCR)
- if the processing cost of rendering the scene (SCR) is greater than the available processing capacity of the computer system (SW), then:
reducing (13) the level of detail (LOD) of the image;
calculating (14) the memory required to render the scene (SMC),
- if the memory required to render the scene (SMC) is greater than the available memory of the computer system (SR), then:
removing (15) non-visible objects from the image.

2. The method according to the preceding claim, wherein the computer system comprises motion sensors, and wherein the method further comprises the steps of:
obtaining (20) a motion vector (VM) based on signals from the motion sensors of the computer system;
calculating (21) a velocity vector (VS) based on at least the motion vector (VM).

3. The method according to the preceding claim, wherein the level of detail (LOD) of the image is reduced based on the velocity vector (VS).

4. The method according to any of the preceding claims, wherein each image is rendered by making at least one draw call (DC) for each object and texture in the scene, and wherein if the processing cost of rendering the scene (SCR) is greater than the available processing capacity of the computer system (SW), then the method further comprises the step of:
reducing (17) the number of draw calls (DC).

5. The method according to the preceding claim when it depends on claim 2, wherein the number of draw calls (DC) is reduced based on the velocity vector (VS).

6. The method according to any of the preceding claims, wherein each image is rendered according to a screen resolution (SP) of the computer system display screen, and wherein if the processing cost of rendering the scene (SCR) is greater than the available processing capacity of the computer system (SW), then the method further comprises the step of:
reducing (18) the percentage of screen resolution (SP) at which the image is rendered.

7. The method according to the preceding claim when it depends on claim 2, wherein the percentage of screen resolution (SP) is reduced based on the velocity vector (VS).

8. The method according to any of the preceding claims, wherein if the memory required to render the scene (SMC) is greater than the available memory of the computer system (SR), then the method further comprises the step of:
removing (19) non-visible textures from the image.

9. The method according to any of the preceding claims, wherein the computer system comprises a GPU, wherein, in the step of obtaining the available processing capacity of the computer system (SW), said available processing capacity of the computer system (SW) is also obtained based on the GPU processing load (GW).

10. The method according to any of the preceding claims, wherein the computer system comprises a GPU, wherein, in the step of obtaining the available memory of the computer system (SR), said available memory of the computer system (SR) is also obtained based on the available GPU memory (GA).

11. The method according to any of the preceding claims, wherein the computer system comprises a GPU, wherein the method further comprises the step of:
allocating (22) memory of a GPU of the computer system for textures.

12. The method according to the preceding claim, wherein each texture in the scene comprises a plurality of MIP maps, and wherein the method further comprises the step of:
if the GPU memory is insufficient, then replacing (23) one or more textures with one of the corresponding MIP maps thereof.

13. A computer program with instructions that, when run by a computer system, causes the computer system to carry out the steps of the method according to any of claims 1-12.

14. A medium readable by a computer system with instructions that, when run by a computer system, cause the computer system to carry out the steps of the method according to any of claims 1-12.
